(19) Europäisches Patentamt
European Patent Office
Office européen des brevets

(11) EP 3 751 040 A1

(12) **EUROPEAN PATENT APPLICATION**
published in accordance with Art. 153(4) EPC

(43) Date of publication:
**16.12.2020 Bulletin 2020/51**

(21) Application number: **19750397.2**

(22) Date of filing: **04.02.2019**

(51) Int Cl.:
***D04H 3/04*** *(2012.01)* ***D04H 3/14*** *(2012.01)*
***C08J 5/18*** *(2006.01)* ***D01F 6/62*** *(2006.01)*
***D01F 6/84*** *(2006.01)* ***D04H 3/011*** *(2012.01)*

(86) International application number:
**PCT/JP2019/003916**

(87) International publication number:
**WO 2019/156033 (15.08.2019 Gazette 2019/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **06.02.2018 JP 2018019322**

(71) Applicant: **Kuraray Co., Ltd.**
**Kurashiki-shi, Okayama 710-0801 (JP)**

(72) Inventors:
- **TONOSAKI, Hiroki**
  **Osaka-shi, Osaka 530-8611 (JP)**
- **KATAYAMA, Takashi**
  **Tokyo 100-8115 (JP)**
- **OGINO, Yuji**
  **Saijo-shi, Ehime 793-8585 (JP)**

(74) Representative: **Müller-Boré & Partner Patentanwälte PartG mbB**
**Friedenheimer Brücke 21**
**80639 München (DE)**

# (54) FILAMENTARY TAPE AND COMPOSITE MATERIAL INCLUDING SAID TAPE

(57) Provided is a filamentary tape (10) comprising liquid crystal polyester fiber multifilaments (1), in which bundles of the fibers aligned in one direction are unified into a tape shape. The filamentary tape (10) comprises the multifilaments (1) including a plurality of liquid crystal polyester fibers aligned in one direction are unified by partial fusion between the liquid crystal polyester fibers.

Fig. 3

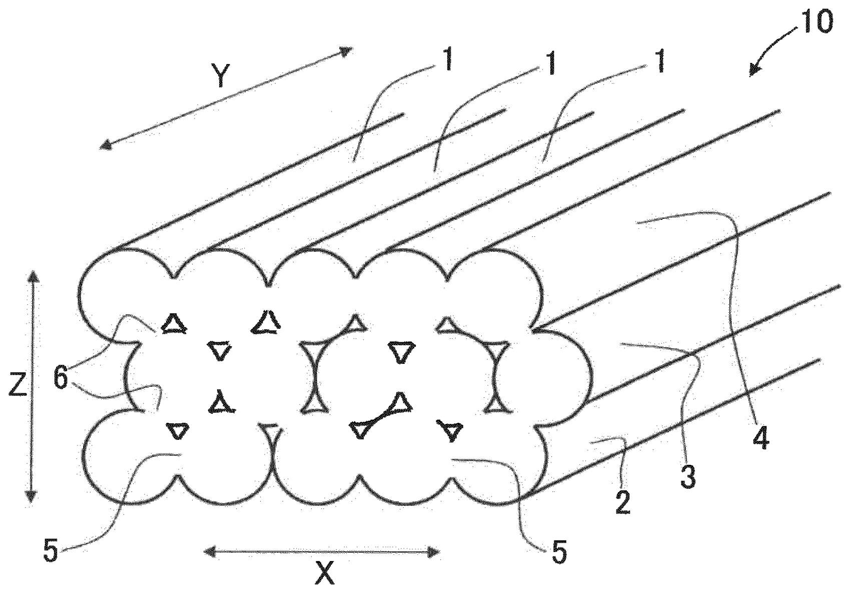


EP 3 751 040 A1

**Description**

CROSS REFERENCE TO THE RELATED APPLICATION

This application is based on and claims Convention priority to Japanese patent application No. 2018-19322, filed February 6, 2018, the entire disclosure of which is herein incorporated by reference as a part of this application.

BACKGROUND OF THE INVENTION

The present invention relates to a filamentary tape comprising liquid crystal polyester fiber multifilaments, in which fibers in a bundle(s) aligned in one direction are unified into a tape shape.

Conventionally, fiber-reinforced composite in which a matrix resin (such as a synthetic resin) is mixed with fibers in order to impart strength, heat resistance and wear resistance have been used in a wide range of fields. As a method for producing a fiber-reinforced composite, it has been proposed to apply a resin to the multifilaments, to impregnate the multifilaments with a resin, to cover the multifilaments with a resin, or to fix a shape of the multifilaments in a thermal way so as to provide a tape-shaped or sheet-shaped material from the fiber multifilaments.

For example, Patent Document 1 (JP Laid-open Patent Publication No. 2008-291170) discloses a fiber-reinforced tape including a thermoplastic resin and high tenacity multifilaments being opened, wherein the tape includes 1 to 3 layers of single fibers overlaid in a thickness direction when seen from its cross section, each single fiber having single fiber fineness from 0.1 to 5.5 dtex, the tape has a width/thickness ratio of 10 or greater and a coefficient of variation of 7% or lower in the width, and spaces between the single fibers are substantially filled with a thermoplastic resin.

Patent Document 2 (WO 2011/019512) discloses a polyethylene tape article having an average cross-sectional aspect ratio of at least 10:1, an intrinsic viscosity from about 7 dl/g to about 40 dl/g when measured in decalin at 135°C in accordance with ASTM D1601-99, and a tensile strength of at least about 3.6 GPa when measured using a sample having a gauge length of 10 inches (25.4 cm) at an extension rate of 100% per minute in accordance with ASTM D882-09.

In contrast, although not a tape-shaped product, Patent Document 3 (JP Laid-open Patent Publication No. 2017-179647) discloses liquid crystal polyester multifilaments, wherein a multifilament yarn has an actual yarn width ratio X in a range from 20 to 70%, the ratio being calculated as a proportion of an actual yarn width B to a theoretical yarn width A. This document points out that where partial bonding occurs between entangled fibers, the bonded part becomes a defect, decreasing a utilization factor of raw-yarn tenacity.

[Related Document]

[Patent Document]

[Patent Document 1] JP Laid-open Patent Publication No. 2008-291170
[Patent Document 2] WO 2011/019512
[Patent Document 3] JP Laid-open Patent Publication No. 2017-179647

SUMMARY OF THE INVENTION

The method of producing a tape according to Patent Document 1, however, has a problem that the tape is deteriorated in tensile strength because the thermoplastic resin and the high-tenacity fiber multifilaments are bonded together, resulting in a lower density of the high-tenacity fiber multifilaments in the fiber-reinforced tape.

The tape including ultrahigh-molecular-weight polyethylene multifilaments according to Patent Document 2 has a problem that the tape has poorer heat resistance than those of other high-tenacity fibers (such as wholly aromatic polyester fibers, aromatic polyamide fibers, carbon fibers, poly para-phenylenebenzobisoxazole fibers) because the tape is made of polyethylene. Also, since the method for producing the ultrahigh-molecular-weight polyethylene tape includes a step of applying heat and pressure in a cross-sectional direction of fibers so as to make the fibers flattened, the pressure applied to the fibers changes fiber characteristics change, so as to reduce resulting in unsatisfactory utilization of fiber tenacity.

Further, although Patent Document 3 performs a step of opening a yarn of single fibers in a direction perpendicular to a yarn longitudinal direction so as to make the yarn to have an actual yarn width ratio within a specific range, Patent Document 3 directs to prevention of fusion between entangled fibers during a heat treatment step to improve a utilization of tenacity derived from single fibers of the yarn. Further, Patent Document 3 is characterized in avoidance of fusion in the heat treatment step as reduced fusion as possible so that the document is silent on the degree of fusion

between fibers required to maintain the tape or sheet shape. Therefore, the liquid crystal polyester multifilaments obtained by this method are insufficiently bonded by fusion for maintaining and fixing the tape shape and thus cannot be used as a material or a raw material for a composite material, while maintaining its shape as a filamentary tape.

The inventors of the present invention conducted extensive studies in order to obtain a tape having excellent heat resistance and high tensile strength, as well as good handleability with a uniform shape in a longitudinal direction and high shape retention, and found that by performing heat treatment to multifilaments that are spread to a predetermined width sufficient to cause bonding (fusion) between single fibers, it is possible to provide a filamentary tape in which liquid crystal polyester multifilaments aligned in one direction are partially bonded to each other to be unified, the filamentary tape having heat resistance derived from the liquid crystal polyester as well as high tenacity caused by the bonding between fibers aligned in the one direction, and further found that it is possible to produce a tape product that is capable of maintaining the form of the fibers aligned in one direction even in a final product. The inventors thus achieved the present invention.

That is, the present invention may include the following aspects.

Aspect 1 A filamentary tape comprising multifilaments including a plurality of liquid crystal polyester fibers, wherein the multifilaments aligned in one direction are unified by partial fusion between the liquid crystal polyester fibers.

Aspect 2 The filamentary tape according to aspect 1, wherein the filamentary tape has a fusion score of 10 or higher (preferably 20 or higher).

Aspect 3 The filamentary tape according to aspect 1 or 2, wherein the filamentary tape has a tensile strength of 2.5 GPa or higher (preferably 2.8 GPa or higher, and further preferably 3.2 GPa or higher), a strength retention rate at 100°C of 40% or higher (preferably 60% or higher, and further preferably 80% or higher), and a tenacity exhibiting rate at 150°C of 30% or higher (preferably 35% or higher, and further preferably 40% or higher).

Aspect 4 The filamentary tape according to any one of aspects 1 to 3, wherein in the filamentary tape, a ratio ($a_t/L$) of a thickness (at) to a theoretical single fiber diameter (L) is 1.5 or higher (preferably 1.8 or higher).

Aspect 5 The filamentary tape according to any one of aspects 1 to 4, wherein the filamentary tape has a width/thickness ratio of 5 or higher and 10000 or lower (preferably 10 or higher and 1000 or lower).

Aspect 6 The filamentary tape according to any one of aspects 1 to 5, wherein in the filamentary tape, a coefficient of variation in width is 20 CV% or lower (preferably 15 CV% or lower).

Aspect 7 The filamentary tape according to any one of aspects 1 to 6, wherein in the filamentary tape, a coefficient of variation in thickness is 15 CV% or lower (preferably 10 CV% or lower).

Aspect 8 A weaving material comprising a filamentary tape according to any one of aspects 1 to 7.

Aspect 9 A woven fabric comprising a filamentary tape according to any one of aspects 1 to 7.

Aspect 10 A composite material comprising a filamentary tape according to any one of aspects 1 to 7.

## EFFECT OF THE INVENTION

The present invention can provide a filamentary tape that has heat resistance and high tenacity and is excellent in handleability.

## BRIEF DESCRIPTION OF THE DRAWINGS

Fig. 1 shows an image representing a state of dispersion of a material that is shredded and stirred in water in order to determine a fusion score of a filamentary tape obtained in Example 1;

Fig. 2 shows an image representing a state of dispersion of a material of multifilaments obtained in Comparative Example 3 that is shredded and stirred in water to disperse the material;

Fig. 3 shows an enlarged schematic perspective view for illustrating a bonding state between single fibers constituting a filamentary tape of the present invention; and

Fig. 4 shows a schematic view for illustrating a model in which circles each having a single fiber diameter L are closest-packed in a filamentary tape of the present invention.

## DESCRIPTION OF THE EMBODIMENTS

The present invention provides a tape-shaped product comprising liquid crystal polyester multifilaments, in which single fibers of the liquid crystal polyester fiber multifilaments aligned in one direction are partially bonded to be unified. Such a tape-shaped product can be obtained as a filamentary tape in which the respective constituting filaments maintain their shapes as single fibers while partial fusion occurs between adjacent liquid crystal polyester single fibers

such that the tape is unified as a whole. As for the fibers aligned in one direction, the respective single fibers do not need to be aligned exactly parallel as long as the fibers are aligned substantially parallel so as to form a tape shape as a whole.

Fusion between the single fibers may occur at contact parts between the liquid crystal polyester single fibers, generating bonded parts (fused parts) in a linear and/or point-like manner. For example, the adjacent single fibers may be bonded in a linear and/or point-like manner over a longitudinal direction of the aligned multifilaments.

In the present invention, the term "filamentary tape" means a fiber aggregate (assembly) in which fibers in multifilaments aligned in one direction are partially bonded to be unified, unlike typical multifilaments.

The determination of a fiber aggregate in which the liquid crystal polyester fibers are unified can be confirmed by, for example, visually or microscopically observing a behavior of shredded objects each cut to a predetermined length (for example, 5 mm) and stirred in water at a predetermined speed to find many strip-like materials present besides a stirred material of the single fibers as shown in Fig. 1 and described in the section of "Fusion Score" in Examples which will be described later. In contrast, in cases of typical multifilaments, even where shredded objects are stirred in water in the same manner, no strip-like materials are present as shown in Fig. 2, indicating the fusion score of 0.

From the viewpoint of handleability of the fiber aggregate, it is preferable that the greater the degree of fusion of the fiber aggregate is, the smaller the effort to maintain the tape shape is. Where the degree is expressed in a fusion score, it may preferably be 10 or higher, and more preferably 20 or higher. The upper limit of the fusion score is 25.

For example, Fig. 3 shows an enlarged schematic perspective view for illustrating a filamentary tape of the present invention. The filamentary tape 10 comprises a plurality of liquid crystal polyester fibers 1 aligned in one direction. The filamentary tape 10 has a longitudinal direction denoted as Y direction. The tape 10 has a width direction denoted as X direction and a thickness direction denoted as Z direction in its cross-section.

The filamentary tape may have a thin shape due to the tape shape, and the thin shape may be expressed by, for example, a width/thickness ratio of the tape, which is a ratio of dimensions of the tape in the width direction (X direction) with respect to the thickness direction (Z direction).

In order to enhance integrity, the liquid crystal polyester fibers constituting the filamentary tape may preferably have bonded parts not only in the width direction, but also in the thickness direction. Thus, in order to distribute the bonded parts in the thickness direction as well, it is preferable that there are a plurality of pseudo-layers stacked in the thickness direction, in which each of the pseudo-layers is formed from a row of the single fiber aligned parallel to each other on a predetermined plane. It should be noted that Fig. 3 shows an ideal stack of pseudo-layers, and an actual filamentary tape may not necessarily have such an ideal stack.

As shown in Fig. 3, the filamentary tape 10 includes the plurality of single fibers 1 aligned in the one direction which form a bottom pseudo-layer 2, an intermediate pseudo-layer 3 and a top pseudo-layer 4. It should be noted that although the Fig. 3 shows a single intermediate pseudo-layer for the sake of simplification, there may be a plurality of intermediate pseudo-layers (for example, 2 to 10 layers).

In the bottom pseudo-layer 2, a plurality of single fibers aligned in one direction are in contact with each other to form a lowest pseudo-layer. On the top of the bottom pseudo-layer 2, another plurality of single fibers aligned in one direction are overlaid such that the single fibers are in contact with each other to form the intermediate pseudo-layer 3. In a similar manner, yet another plurality of single fibers aligned in one direction are overlaid such that the single fibers are in contact with each other to form a highest pseudo-layer as the top pseudo-layer 4.

In the filamentary tape 10, the single fibers that are in contact with each other contribute to the bonded parts 5 in the width direction, as well as the single fibers that are in contact with each other between the pseudo-layers also contribute to bonded parts 6 in the thickness direction. Further, since the bonded parts are formed in a linear or point-like manner in the longitudinal direction of the filamentary tape, the bonded parts are three-dimensionally distributed in the filamentary tape.

The filamentary tape may have a width (average value $a_w$) of, for example, 0.5 mm or wider, preferably 1 mm or wider, and more preferably 2 mm or wider. On the other hand, there is no specific upper limit for the width, and the upper limit may be suitably set depending on the purpose. In order to align the fibers in one direction during the spreading processing of the fibers while allowing the fibers to fuse with each other, however, the width of the filamentary tape may be 3000 mm or narrower, preferably 1000 mm or narrower, more preferably 500 mm or narrower, and further preferably 200 mm or narrower.

The filamentary tape preferably has a uniform width in terms of quality stability. For example, the filamentary tape may have a coefficient of variation in the tape width of 20 CV% or lower, and preferably 15 CV% or lower. The tape width and the coefficient of variation in the tape width are measured in accordance with the methods described in the section of "Tape Width and Coefficient of Variation in Tape Width" in Examples described later.

The filamentary tape may have a thickness (average value at) suitably set in accordance with the width. The thickness may be, for example, 0.0005 mm or thicker, preferably 0.01 mm or thicker, and more preferably 0.05 mm or thicker. In order to maintain a thin shape, however, the thickness may preferably be, for example, 10 mm or thinner and more preferably 3 mm or thinner.

The filamentary tape preferably has a uniform thickness in terms of quality stability. For example, the filamentary tape may have a coefficient of variation in the tape thickness of 15 CV% or lower, and preferably 10 CV% or lower. The tape thickness and the coefficient of variation in the tape thickness are measured in accordance with the methods described in the section of "Tape Thickness and Coefficient of Variation in Tape Thickness" in Examples described later.

The filamentary tape of the present invention obtained by the above process may have a width/thickness ratio of the tape of, for example, 2 or higher, preferably 5 or higher and 10000 or lower, and more preferably 10 or higher and 1000 or lower. Where the width/thickness ratio of the tape approaches 1, the shape becomes unsuitable for use as a tape. Too large width/thickness ratio may be not preferable because of the difficulty of fiber alignment during spreading processing.

For example, where each of the single fibers constituting the filamentary tape has a theoretical single fiber diameter L, a ratio ($a_t$/L) of the thickness (at) to the theoretical single fiber diameter (L) of the filamentary tape is preferably greater than a specific value in order to maintain the tape shape. In order to improve maintaining ability of the tape shape, the value ($a_t$/L) may be preferably 1.5 or higher, and more preferably 1.8 or higher.

Since the filamentary tape is unified thanks to the partial fusion between the single fibers, the filamentary tape may have a substantially closest-packed structure in which columns each having a diameter L are aligned in the longitudinal direction, where L denotes a fiber diameter of each single fiber. For example, as shown in Fig. 4, where an ideal closest-packed structure has a packing ratio of 86% in a cutting surface area (S) in a tape cross-section, a filamentary tape having a substantially closest-packed structure may include fibers in a cross-sectional density of 70% or higher in the cross-section of the filamentary tape. Since the filamentary tape is unified thanks to the partial fusion between the single fibers, it is possible to increase a fiber density in the tape.

In a model in which circles each having a single fiber diameter L are closest-packed, where a thickness of a single layer is regarded as L, a thickness of 2 layers can be calculated as $(1 + 0.5 \times \sqrt{3})L \approx 1.87L$, and a thickness of 3 layers can be calculated as $(1 + \sqrt{3})L \approx 2.73L$. In view of the fact that actual yarns have variation in single fiber diameter, entanglement between fibers as well as minor deformation due to fusion, where a value of ($a_t$/L) is 1.5 or higher, the single-layered portion in the filamentary tape can be reduced or eliminated so as to advantageously ensure three-dimensional fusion between upper and lower layers in the filamentary tape, resulting in good fixation of the tape shape.

The upper limit of ($a_t$/L) may be suitably set depending on, e.g., the width and the number of fibers in the filamentary tape. The upper limit may be, for example, about 1000, preferably about 100, and further preferably about 10.

The theoretical single fiber diameter L can be calculated by the following formula, using a total fineness D (dtex) of the liquid crystal polyester fibers constituting the filamentary tape, the number of the single fibers F, a specific gravity d (g/cm$^3$), and the circular constant $\pi$.

$$\text{Theoretical single fiber diameter L (mm)} = \{(4D / F) / (d \times 10^6 \times \pi)\}^{0.5} \times 10$$

Hereinafter, the present invention will be described in detail.

A filamentary tape of the present invention mainly comprises liquid crystal polyester multifilaments. In order to exhibit tenacity derived from the liquid crystal polyester multifilaments, for example, a proportion of the liquid crystal polyester multifilaments in the filamentary tape may be, for example, 90 wt% or higher, preferably 95 wt% or higher, more preferably 99 wt% or higher, and particularly preferably 100 wt%.

The filamentary tape mainly comprises liquid crystal polyester fibers so that the liquid crystal polyester fibers can be used as a tape comprising a plurality of liquid crystal polyester fibers in a unified shape, thus manufacture processability can be enhanced when the tape is used as a fabric material and a composite material for molding. Further, although the liquid crystal polyester fibers have high cutting resistance, the unified tape also makes it possible to suppress cutting slippage between fibers in the cross-sectional shape.

Since the filamentary tape of the present invention mainly comprises liquid crystal polyester multifilaments, the filamentary tape is high in strength. For example, the filamentary tape may have a tensile strength of 2.5 GPa or higher, preferably 2.8 GPa or higher, and further preferably 3.2 GPa or higher. Although there is no particular upper limit for the tensile strength, an upper limit which can be reached in the present invention may be, for example, 4.5GPa. The tensile strength is determined in accordance with the measurement method described in Examples which will be described later.

Since the filamentary tape of the present invention mainly comprises liquid crystal polyester fibers having high heat resistance, the tape has also heat resistance. In the present invention, heat resistance may be, for example, evaluated in accordance with the method described in the section of "Strength Retention Rate at 100°C" in Examples which will be described later. A strength retention rate after heating at 100°C for 10 minutes (referred to as strength retention rate at 100°C) may be 40% or higher, preferably 60% or higher, and further preferably 80% or higher. Although there is no particular upper limit for the strength retention rate at 100°C, an upper limit which can be reached in the

present invention may be, for example, 100%.

As another method for heat resistance evaluation, heat resistance can be evaluated, for example, in accordance with the method described in the section of "Tenacity Exhibiting Rate at 150°C" in Examples which will be described later. A ratio of a tensile strength under an atmosphere at 150°C relative to a tensile strength at room temperature, the ratio referred to as tenacity exhibiting rate at 150°C, may be 30% or higher, preferably 35% or higher, and further preferably 40% or higher. Although there is no particular upper limit for the tenacity exhibiting rate at 150°C, an upper limit which can be reached in the present invention may be, for example, 80%.

In the present invention, heating is performed to partially melt surfaces of the liquid crystal polyester fibers so as to bond and unify the melt parts so that the fibers can be used in a tape shape in order to improve handleability while providing required heat resistance. As fibers having the above-described properties, the liquid crystal polyester fibers may be those made of a thermoplastic polymer capable of forming an optically anisotropic melt phase. Preferable fibers are, for example, wholly aromatic polyester fibers (polyarylate fibers), which are thermoplastic.

Liquid crystal polyester fibers (for example, wholly aromatic polyester fiber) can be obtained by melt-spinning a liquid crystal polyester (for example, a wholly aromatic polyester). The wholly aromatic polyester comprises repeating structural units originating from, for example, aromatic diols, aromatic dicarboxylic acids, aromatic hydroxycarboxylic acids, etc. As long as the effect of the present invention is not spoiled, the repeating structural units originating from aromatic diols, aromatic dicarboxylic acids, and aromatic hydroxycarboxylic acids are not limited to a specific chemical composition. The wholly aromatic polyester may include the structural units originating from aromatic diamines, aromatic hydroxy amines, or aromatic aminocarboxylic acids in the range which does not spoil the effect of the present invention. For example, preferable structural units may include units shown in Table 1.

Table 1

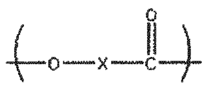 , 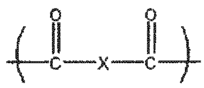 , 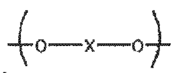 , 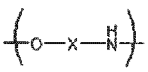

In the formula, X is selected from the following structures.

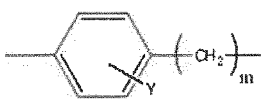 , 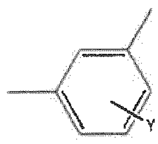 , 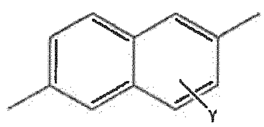 ,

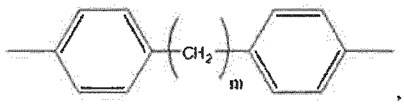 , 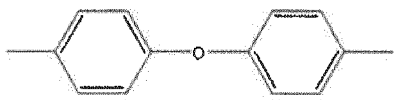 ,

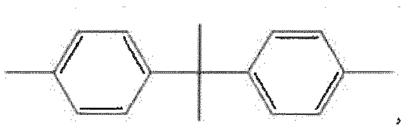 , 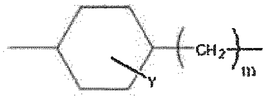 , 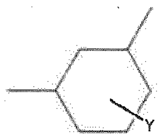

m is an integer from 0 to 2, Y is a substituent selected from hydrogen atom, halogen atoms, alkyl groups, aryl groups, aralkyl groups, alkoxy groups, aryloxy groups, aralkyloxy groups.

In the structural units in Table 1, m is an integer from 0 to 2, and Y in the formula independently represents, as from one substituent to the number of substituents in the range of the replaceable maximum number of aromatic ring, a hydrogen atom, a halogen atom (for example, fluorine atom, chlorine atom, bromine atom and iodine atom), an alkyl group (for example, an alkyl group having 1 to 4 carbon atoms such as methyl group, ethyl group, isopropyl group and t-butyl group), an alkoxy group (for example, methoxy group, ethoxy group, isopropoxy group, n-butoxy group, etc.), an aryl group (for example, phenyl group, naphthyl group, etc.), an aralkyl group [benzyl group (phenylmethyl group), phenethyl group (phenylethyl group)], an aryloxy group (for example, phenoxy group etc.), an aralkyloxy group (for example, benzyloxy group etc.), and others.

As more preferable structural units, there may be mentioned structural units as described in Examples (1) to (18) shown in the following Tables 2, 3, and 4. It should be noted that where the structural unit in the formula is a structural unit which can show a plurality of structures, combination of two or more units may be used as structural units for a polymer.

Table 2

| | |
|---|---|
| (1) | 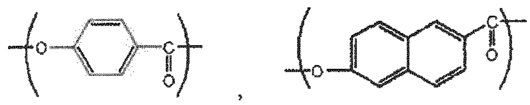 |
| (2) | 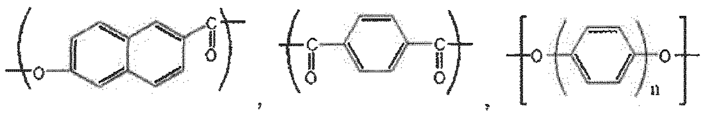 |
| (3) | 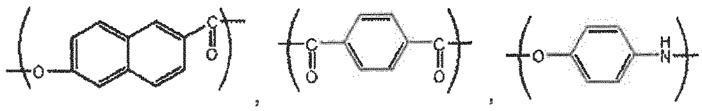 |
| (4) | 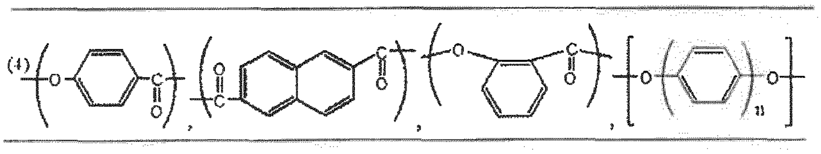 |
| (5) | 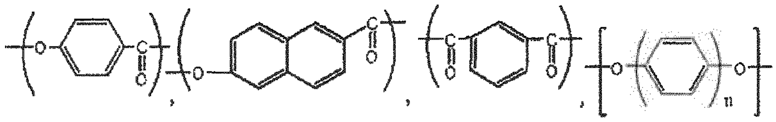 |
| (6) | 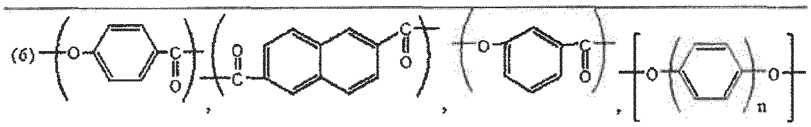 |
| (7) | 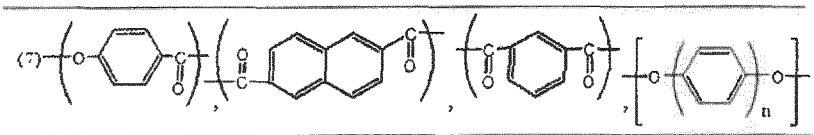 |
| (8) | 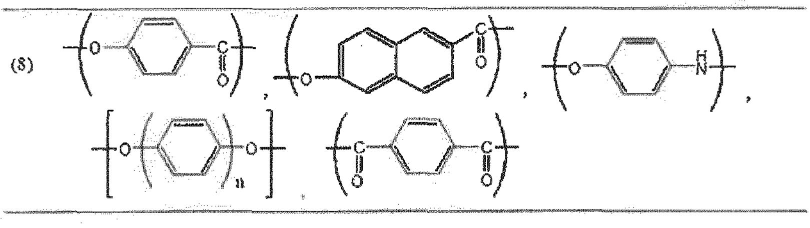 |

Table 3

| | |
|---|---|
| (9) | 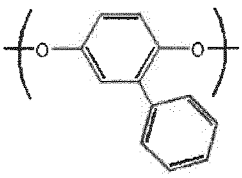 , 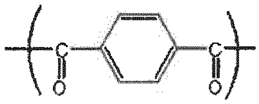 |
| (10) | 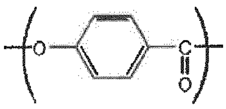 , 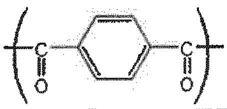 , 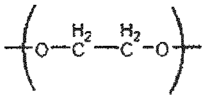 |
| (11) | 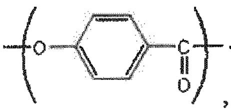 , 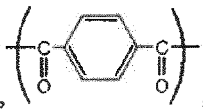 , 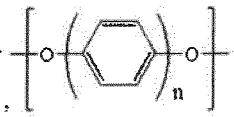 , 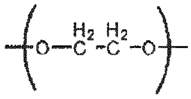 |
| (12) | 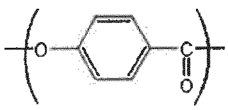 , 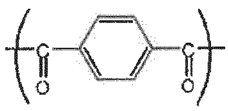 , 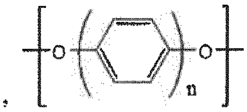 |
| (13) | 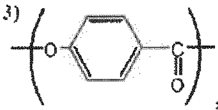 , 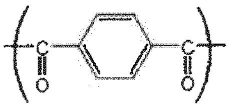 , 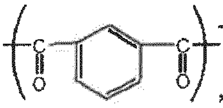 , 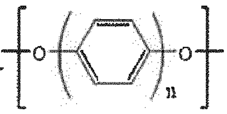 |
| (14) | 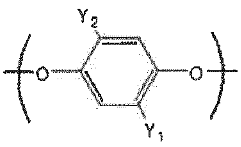 , 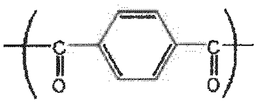 , 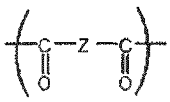 |
| (15) | 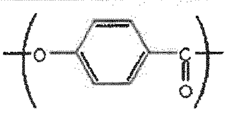 , 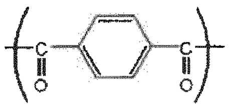 , 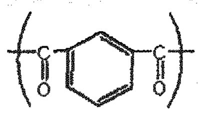 , 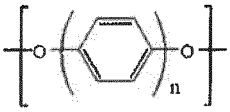 , 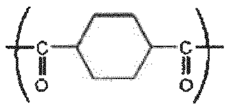 |

Table 4

(16) 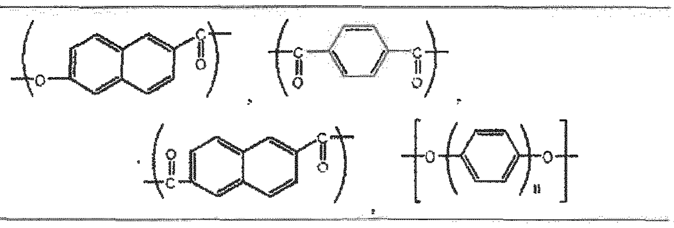

(17) 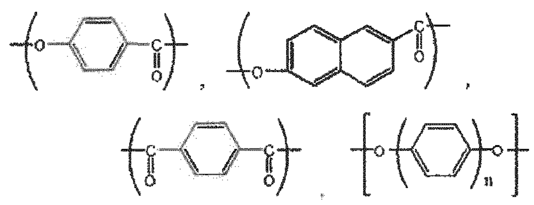

(18) 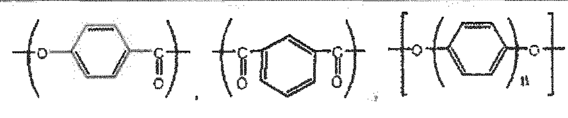

In the structural units shown in Tables 2, 3, and 4, n is an integer of 1 or 2, among each of the structural units, n= 1 and n= 2 may independently exist, or may exist in combination; each of the $Y_1$ and $Y_2$ independently represents, hydrogen atom, a halogen atom, (for example, fluorine atom, chlorine atom, bromine atom, iodine atom, etc.), an alkyl group (for example, an alkyl group having 1 to 4 carbon atoms such as methyl group, ethyl group, isopropyl group, and t-butyl group, etc.), an alkoxy group (for example, methoxy group, ethoxy group, and isopropoxy group, n-butoxy group, etc.), an aryl group (for example, phenyl group, naphthyl group, etc.), an aralkyl group [benzyl group (phenylmethyl group), phenethyl group (phenylethyl group), etc.], an aryloxy group (for example, phenoxy group etc.), an aralkyloxy group (for example, benzyloxy group etc.), and others. Among these, the preferable Y may include a hydrogen atom, a chlorine atom, a bromine atom, and methyl group.

Z may include substitutional groups denoted by following formulae.

Chem. 1

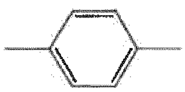 , 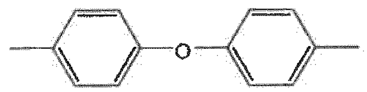 , 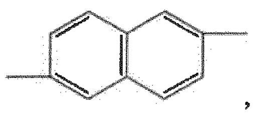 ,

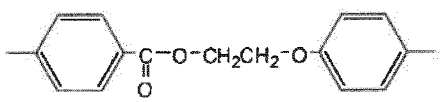 , 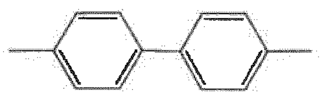

Preferable wholly aromatic polyesters may comprise a combination of a structural unit having a naphthalene skeleton. Especially preferable one may include both the structural unit (A) derived from hydroxybenzoic acid and the structural unit (B) derived from hydroxy naphthoic acid. For example, the structural unit (A) may have a following formula (A), and the structural unit (B) may have a following formula (B). In order to improve melt-spinnability, the ratio of the structural unit (A) and the structural unit (B) may preferably be in a range of former/latter of 9/1 to 1/1, more preferably from 7/1 to 1/1, and still preferably from 5/1 to 1/1.

Chem. 2

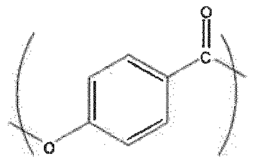

··· (A)

Chem. 3

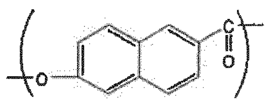

··· (B)

The total proportion of the structural units of (A) and (B) may be, based on all the structural units, for example, 65 mol% or higher, more preferably 70 mol% or higher, and further preferably 80 mol% or higher. A wholly aromatic polyester having the structural unit (B) at a proportion of 4 to 45 mol % is especially preferred among polymers.

The wholly aromatic polyester suitably used in the present invention preferably has a melting point in the range from 250 to 360°C, and more preferably from 260 to 320°C. The melting point is measured in accordance with the method described in the section of "Melting Point" in Examples which will be described later.

The above liquid crystal polyester (in particular, wholly aromatic polyester) may be added with thermoplastic polymers, such as polyethylene terephthalate, a modified-polyethylene terephthalate, a polyolefin, a polycarbonate, a polyamide, a polyphenylene sulfide, a polyether ether ketone, a fluoro-resin, and others, as long as they do not spoil the effect of the present invention. A variety of additives may also be added, including inorganic substances such as titanium oxide, kaolin, silica, and barium oxide; carbon black; a colorant such as dyes and paints; an antioxidant; an ultraviolet-ray absorbent; and a light stabilizer.

As long as the liquid crystal polyester fibers in the present invention have a property that allows a part of the fiber surfaces to be melt by heating, the spinning method is not limited to a specific one. Typically, fibers obtained by melt-spinning may be used. Melt-spinning may be carried out by a known or conventional method. For example, fibers can be obtained by melting a fiber-formable resin spinnable into liquid crystal polyester fibers in an extruder, followed by discharging the melt through a nozzle at a predetermined spinning temperature.

Unlike Patent Document 3, in the production process of the filamentary tape of the present invention, it is not necessary to perform special steps of (i) melt-spinning multifilament spun yarns without convergence of fibers (filaments), (ii) pre-heating the spun yarns in such an extent that fibers are not bonded, and (iii) further performing solid-phase polymerization. According to the present invention, multifilament spun yarns are gathered with convergence of fibers (filaments), and heat treatment is carried out such that fibers are bonded on their surfaces. Thus, the present invention is completely distinguished from the multifilaments of Patent Document 3 in terms of the production method.

Further, a plurality of bundles of multifilaments may be converged in the form of tow in which multifilaments are aligned. The tow may have a thickness of preferably 0.1 mm or thicker and 10 mm or thinner, more preferably 0.1 mm or thicker and 5 mm or thinner, and further preferably 0.1 mm or thicker and 3 mm or thinner.

Each of the liquid crystal polyester fibers constituting the filamentary tape of the present invention may have a single fiber fineness of preferably 0.5 dtex or higher and 50 dtex or lower, more preferably 1 dtex or higher and 15 dtex or lower, and further preferably 1.5 dtex or higher and 10 dtex or lower. Where the single fiber fineness is too low, it may be difficult to uniformly align the fibers in one direction, so that uniform strength of the resulting filament tape may deteriorated. Where the single fiber fineness is too high, sufficient bonding may not be achieved because of a small contact area between the single fibers so as to reduce integrity of the filamentary tape.

The liquid crystal polyester fibers constituting the filamentary tape may have a total fineness of preferably 10 dtex or higher and 50000 dtex or lower, more preferably 15 dtex or higher and 30000 dtex or lower, and further preferably 25 dtex or higher and 10000 dtex or lower. Where the total fineness is too low, since the filamentary tape may have an excessively narrow width, there is a possibility that the filamentary tape may be unsuitable for use as a tape. Where the total fineness is too large, since it may be difficult to uniformly align the fibers, the strength of the filamentary tape may have high variation.

Accordingly, the width and the thickness of the filamentary tape obtained from the fibers can be controlled to desired values by adjusting the fineness and the tow thickness in preferable ranges.

Any process may be used to form a tape shape by making fibers aligned in one direction in the condition that the fibers aligned in the one direction can be bonded with each other with a certain width. For example, heat treatment

may be performed without performing specific spreading treatment of multifilament yarns. Alternatively, heat treatment may be performed after known spreading treatment of multifilament yarns. There may be exemplified, as spreading treatment of multifilament yarns, the spreading method described in JP Patent No. 3064019 may be used to spread the multifilament yarns and align the fibers in the multifilament yarns.

The fibers that have been aligned into a tape shape would lose the tape shape if the fibers are passed through a point-convergence type guide or roller such as a snail guide, a v-groove roller, and a winder with a claw-shaped traverse guide. Therefore, once the fibers have been aligned into a tape shape, it is preferable to use a surface-convergence type tool such as a bar guide, a flat-bottomed roller, and a bobbin-traverse type winder in the rest of the production process, instead of point-convergence type tools that are normally used in production of the liquid crystal polyester multifilaments.

The surface-converged multifilament fiber bundle(s) may be wound on a winding roll before being subjected to heating, if necessary, taking up via a roller or the like. Then, the surface-converged multifilament fiber bundle(s) may be heated at a required temperature in order to make a part of the surfaces of the single fibers molten so that the adjacent single fibers are bonded with each other.

An oiling agent may be or may not be applied to fibers. Where an oiling agent is applied, for example, the oiling agent may preferably be applied to both upper and lower surfaces of the surface-converged multifilament fiber bundles. The application of an oiling agent suppresses fusion between fiber bundles while improving fusion between the adjacent single fibers in each fiber bundle. For example, the oiling agent may be applied to the surface-converged multifilament fiber bundles by using, e.g., an oiling roller after surface-converging the fibers and before winding them using a winder.

According to the filamentary tape of the present invention, a tape shape can be achieved by melting a part of the surfaces of the fibers aligned in one direction so as to bond the fibers with each other. In particular, the single fibers of the liquid crystal polyester fiber multifilaments can be suitably unified by bonding the fibers with each other not only in the width direction, but also in the thickness direction (see Fig. 3). This structure makes it possible to provide a filamentary tape having excellent heat resistance and strength free from binder fibers or impregnating reinforcing fibers with a resin.

When heating the filamentary tape of the present invention, the heat treatment is not particularly limited as long as a part of the surfaces of the single fibers can be molten so as to bond the single fibers with each other. Any known method may be used as a method of the heat treatment, including, for example, atmosphere heating and contact heating. The atmosphere may be either air or inert gas (for example, nitrogen or argon). It should be noted that as long as the effect of the present invention is not deteriorated, the heat treatment may be performed either in batch process or continuous process.

The temperature required to melt a part of the fiber surfaces of the single fibers to bond the single fibers with each other may have a lower limit of T1-100°C or higher, more preferably T1-50°C or higher, and further preferably T1-30°C or higher and an upper limit of T1-1°C or lower, more preferably T1-10°C or lower, and further preferably T1-30°C or lower, based on the melting point of the fibers used (i.e., melting point of the fibers before heat treatment: T1), which is determined in accordance with the method described in the section of "Melting Point" in Examples which will be described later. Heating to a temperature equal to or above the melting point of the fibers is not preferable because it may cause fiber breakage due to fusion of the fibers.

It is also possible to melt a part of the surfaces of the single fibers to bond the single fibers with each other with simultaneously performing solid-phase polymerization of the liquid crystal polyester fibers. Where the melting point T1 of the fibers to be subjected to the heat treatment is raised to a temperature T2 due to the solid-phase polymerization, the temperature of the heat treatment may be T2-1°C or lower, more preferably T2-10°C or lower, and further preferably T2-30°C or lower.

Specifically, the temperature of the heat treatment may be, for example, from 180 to 380°C, preferably from about 200 to 350°C, and more preferably from about 250 to 350°C.

Heating period is not particularly limited as long as it is sufficient to melt a part of the surfaces of the single fibers to bond the single fibers with each other, and may be, for example, 1 hour or longer, preferably 5 hours or longer, and more preferably 8 hours or longer. Where solid-phase polymerization is performed, although there is no particular upper limit for the heating period, it may be 100 hours or shorter, and more preferably 50 hours or shorter.

Although the filamentary tape of the present invention comprises liquid crystal polyester fiber multifilaments, it has excellent integrity, making it possible to suppress deformation of the tape. Therefore, the filamentary tape can be directly supplied to processing as a weaving material or a high-order processing material, without involving twisting step. In such a case, a processed product can also exhibit the strength of the filamentary tape.

Since the liquid crystal polyester fibers have high cutting resistance, when a bundle of the multifilaments is cut, cutting slippage between fibers ordinarily occurs in the cross-section of the bundle. In the filamentary tape of the present invention, however, bonding between the fibers can suppress cutting slippage between fibers occurring in the cross-section, making it possible to improve processability.

Where the filamentary tape of the present invention is used as a weaving material, the filamentary tape of the

present invention achieves integrity of the fibers aligned in one direction while maintaining fiber shapes of the respective single fibers constituting the tape. Accordingly, the filamentary tape of the present invention is capable of not only improving fabric strength, but also shortening the time required for a weaving step.

Where the filamentary tape of the present invention is used as a weaving material, the filamentary tape of the present invention preferably has a uniform tape width and/or a uniform tape thickness in the longitudinal direction of the fibers, which makes it possible to produce a compact woven fabric having less gap and high strength.

The woven fabric may be any of a unidirectional woven fabric, a bidirectional woven fabric, a triaxial woven fabric, a multiaxial woven fabric or a non-crimp fabric regarding the alignment direction of the filamentary tape.

More specifically, the woven fabric may include: a unidirectional woven fabric in which the filamentary tapes are arranged as warps or wefts; a bidirectional woven fabric in which the filamentary tapes are arranged as both warps and wefts; a triaxial woven fabric in which the filamentary tapes are arranged as yarns in three directions including longitudinal, transversal and diagonal directions; a multiaxial woven fabric in which the filamentary tapes are arranged as yarns in 4 or more directions; a unidirectional non-crimp fabric in which the filamentary tapes are used as fiber bundles, and the fiber bundles aligned in one direction are fastened by yarns of another species; and a multidirectional non-crimp fabric in which the filamentary tapes are used as fiber bundles, and layers of the fiber bundles aligned in multiple directions (for example, two directions) are fastened by other yarns of another species.

For example, by taking advantage of the shape as a tape in which the fiber shapes are maintained, the filamentary tape may be suitably used as a material for a woven fabric, a fabric or cloth, a sheet-like material, a belt, a tension member, a tie band, a repair tape, an engineering/construction material (for example, flexible container bag), a sport material, a trekking material, a protection material, a rubber reinforcing material, and a material for constituting various reinforcing cords, an electric material, an acoustic material, and others.

The filamentary tape of the present invention may suitably be used for various composite materials (for example, fiber materials for resin reinforcement). An example of such composite materials may include a multilayer plate obtained by overlaying the filamentary tape of the present invention and a sheet made of a matrix resin or impregnating the filamentary tape of the present invention with a matrix resin. In applications which require high strength, the composite material preferably comprises a filamentary tape of the present invention singly without impregnating the tape with a resin.

## EXAMPLES

Hereinafter, the present invention will be described in more detail with reference to Examples. However, the Examples are not intended to limit the present invention whatsoever. Various physical properties in the Examples were determined in accordance with the following methods.

### Melting Point

In accordance with JIS K 7121 test method, a melting point (°C) was determined as a main absorption peak temperature observed in measurement using a differential scanning calorimeter (DSC; "DSC-60A" manufactured by Shimadzu Corporation). Specifically, a melting point was determined as an endothermic peak that occurred when a sample (1 to 10 mg) introduced to an aluminum pan in the DSC device to be sealed was subjected to temperature increase at a rate of 20°C/min, with nitrogen as a carrier gas flowing at 100 cc/min. Depending on the type of the polymer, where a clear peak did not appear during the $1^{st}$ run of the DSC measurement, the temperature was increased at a temperature increase rate of 50°C/min to a temperature higher than an expected flowing temperature by 50°C, retained at that temperature for 3 minutes to completely melt the polymer, and then decreased to 50°C at a temperature decrease rate of 80°C/min. Thereafter, an endothermic peak was measured at a temperature increase rate of 20°C/min, and the observed endothermic peak was determined as a melting point.

### Total Fineness

In accordance with JIS L 1013 (2010) 8.3.1, method A, a total fineness (dtex) was determined as a fineness based on corrected weight measured under a predetermined load of 0.045 cN/dtex.

### Number of Single Fibers

The number of single fibers was counted in accordance with the method described in JIS L 1013 (2010) 8.4.

### Single Fiber Fineness

A single fiber fineness (dtex) was calculated by dividing the total fineness by the number of single fibers.

Tape Width and Coefficient of Variation in Tape Width

Hereinafter, when referring to dimensions of a filamentary tape in a direction orthogonal to a longitudinal direction of fibers, the longer dimension is referred to as a width, and the shorter dimension is referred to as a thickness. A filamentary tape was cut to prepare 10 samples for measurement each having a length of 1000 mm. Using a microscope, widths of the tape were measured at 5 locations for each sample (50 locations in total). In this measurement, the 5 locations for measurement in each sample were separated by 200 mm or longer in the longitudinal direction of the fibers (for example, 5 locations at 10 mm, 230 mm, 450 mm, 670 mm and 890 mm from one end of a 1000-mm sample). An average value $a_w$ of the widths at the total 50 locations was determined as a tape width of the filamentary tape. A coefficient of variation in the tape width of the filamentary tape was calculated by the following formula from $a_w$ and a standard deviation $\sigma_w$ in width at the total 50 locations. Each tape width was measured to 3 significant figures.

$$\text{Coefficient of variation in tape width (CV\%)} = (\sigma_w / a_w) \times 100$$

Tape Thickness and Coefficient of Variation in Tape Thickness

A filamentary tape was cut to prepare 10 samples for measurement each having a length of 1000 mm. With reference to JIS Z 0237 (2009) 5.1, using a dial gauge, thicknesses of the tape were measured at 5 locations for each sample (50 locations in total). In this measurement, the 5 locations for measurement in each sample were separated by 200 mm or more in the longitudinal direction of the fibers (for example, 5 locations at 10 mm, 230 mm, 450 mm, 670 mm and 890 mm from one end of a 1000-mm sample). An average value at of the thicknesses at the total 50 locations was determined as a tape thickness of the filamentary tape. A coefficient of variation in the tape thickness of the filamentary tape was calculated by the following formula from at and a standard deviation $\sigma_t$ in thickness at the total 50 locations. Each tape thickness was measured to 2 significant figures.

$$\text{Coefficient of variation in tape thickness (CV\%)} = (\sigma_t / a_t) \times 100$$

Tensile Strength

A tensile strength (GPa) was measured in accordance with JIS L 1013 (2010) 8.5.1, using an autograph AGS-100B (manufactured by Shimadzu Corporation) in a condition of a tape length of 200 mm without twisting, an initial load of 0.09 cN/dtex, and an extension speed of 100 mm/min, at room temperature (about 25°C). Measurement was performed 6 times for each sample to calculate an average value as a tensile strength (tensile strength at room temperature).

Strength Retention Rate at 100°C

A tensile strength of a sample which had been subjected to heat treatment for 10 minutes under a 100°C atmosphere using a hot air dryer was measured in the same manner as described above in the section of "Tensile Strength" to determine a strength of the sample in thermal fatigue test at 100°C. Then, a strength retention rate at 100°C was calculated by the following formula.

$$\text{Strength retention rate at 100°C (\%)} = \text{(Strength of sample in thermal fatigue test at 100°C)} / \text{(Tensile strength at room temperature)} \times 100$$

Strength Exhibiting Rate at 150°C

A tensile strength at 150°C was measured in the same manner as that described above in the section of "Tensile Strength," except for using a thermostatic tank for a tensile testing device under a 150°C atmosphere as the atmosphere for carrying out the tensile test. It should be noted that a sample was retained under 150°C atmosphere for 1 minute and then was subjected to extension before each measurement. Thereafter, a strength exhibiting rate at 150°C was calculated by the following formula.

$$\text{Strength exhibiting rate at 150°C (\%)} = (\text{Tensile strength at 150°C}) / (\text{Tensile strength at room temperature}) \times 100$$

Fusion Score

A filamentary tape was cut to prepare 25 samples each having a length of 5 mm in a longitudinal direction of fibers (hereinafter, referred to as strip-like materials). The strip-like materials are added into a beaker having an inner diameter of 90 mm and containing 400 mL of water and stirred for 2 minutes at a rotation speed of 600 rpm using a suitable stirring blade having a blade diameter of 60 mm. Then, using a Buchner funnel, the strip-like materials and dispersed material thereof are filtered out on a round filter paper having a diameter of 110 mm by suction filtration. In this process, all the strip-like materials and the dispersed material thereof are rinsed off onto the filter paper by pouring water as needed because the dispersed material tends to adhere to an inner wall of the beaker. Widths of the strip-like materials on the round filter paper are measured by visual inspection or using a microscope. A fusion score is determined as the number of the strip-like materials each maintaining a width of 80% or wider relative to the width of the original filamentary tape.

Since the total number of the strip-like materials put in the beaker is 25, the fusion score is 25 at a maximum and 0 at a minimum. For example, the fusion score of 25 indicates that all the strip-like materials put in the beaker maintained a width of 80% or wider relative to the width before addition. A higher score indicates stronger fusion, which means that the tape shape would be more likely to be maintained. It should be noted that the above values are a condition used for evaluating the tape of 1670 dtex. As long as stirring is performed for 2 minutes at a rotation speed of 600 rpm, the amount of water, the size of the beaker, the size of the stirring blade, and the size of the round filter paper may be suitably changed within a range that the strip-like materials would not be overlapped.

Example 1

Wholly aromatic polyester fiber multifilaments ("Vectran NT": T1 = 276°C; manufactured by Kuraray Co., Ltd.) having a fineness of 1670 dtex and the number of filaments of 300 were used. Each of the fibers had a theoretical single fiber diameter L of 0.0225 mm.

Using a single tow spreading machine FK-2 (manufactured by Harmoni Industry Co.,Ltd.), the multifilaments were spread to have a width of 2 mm determined by visual inspection, and were wound on a roll. The spread fiber bundle wound on the roll was subjected to heat treatment for 16 hours under a nitrogen atmosphere at a temperature in a range from 250 to 300°C to produce a filamentary tape made of the wholly aromatic polyester fibers, in which partial fusion occurred between single fibers. The tape had a melting point of 322°C.

The tape had a width of 1.95 mm (coefficient of variation of 4.36 CV%) and a thickness of 0.081 mm (coefficient of variation of 3.8 CV%). The tape had a width/thickness ratio of 24, and a ratio ($a_t$/L) of the thickness (at) of the filamentary tape to the theoretical single fiber diameter (L) was 3.6. The filamentary tape had a tensile strength of 3.43 GPa, a strength retention rate at 100°C of 99%, and a strength exhibiting rate at 150°C of 57%, indicating high heat resistance and high strength. The obtained tape had a fusion score of 25. Fig. 1 shows a round filter paper used for measurement of the fusion score of the filamentary tape.

Example 2

A filamentary tape made of wholly aromatic polyester fibers was obtained in the same manner as that of Example 1, except for using the spreading machine by adjusting a width of spread multifilaments into 3 mm determined by visual inspection. The tape had a width of 3.50 mm (coefficient of variation of 7.43 CV%) and a thickness of 0.049 mm (coefficient of variation of 3.6 CV%). The tape had a width/thickness ratio of 72, and a ratio ($a_t$/L) of the thickness at of the filamentary tape to the theoretical single fiber diameter L was 2.2. The filamentary tape had a tensile strength of 3.33 GPa, a strength retention rate at 100°C of 98%, and a strength exhibiting rate at 150°C of 58%, indicating high heat resistance and high strength. The obtained tape had a fusion score of 17.

Example 3

A filamentary tape made of wholly aromatic polyester fibers was obtained in the same manner as that of Example 1, except for using the spreading machine by adjusting a width of spread multifilaments into 5 mm determined by visual inspection. The tape had a width of 5.07 mm (coefficient of variation of 8.23 CV%) and a thickness of 0.030 mm (coefficient of variation of 4.1 CV%). The tape had a width/thickness ratio of 169, and a ratio ($a_t$/L) of the thickness $a_t$ of the filamentary

tape to the theoretical single fiber diameter L was 1.3. The filamentary tape had a tensile strength of 2.92 GPa, a strength retention rate at 100°C of 99%, and a strength exhibiting rate at 150°C of 55%, indicating high heat resistance and high strength. The obtained tape had a fusion score of 8.

Example 4

A filamentary tape made of wholly aromatic polyester fibers was obtained in the same manner as that of Example 1, except for using wholly aromatic polyester fibers ("Vectran NT" manufactured by Kuraray Co., Ltd.) having a fineness of 6680 dtex and the number of filaments of 1200, and using the spreading machine by adjusting a width of spread multifilaments into 10 mm determined by visual inspection. The tape had a width of 10.8 mm (coefficient of variation of 12.4 CV%), a thickness of 0.062 mm (coefficient of variation of 8.9 CV%). The tape had a width/thickness ratio of 174, and a ratio ($a_t$/L) of the thickness at of the filamentary tape to the theoretical single fiber diameter L was 2.8. The filamentary tape had a tensile strength of 3.36 GPa, a strength retention rate at 100°C of 95%, and a strength exhibiting rate at 150°C of 52%, indicating high heat resistance and high strength. The obtained tape had a fusion score of 20.

Example 5

A filamentary tape made of wholly aromatic polyester fibers was obtained in the same manner as that of Example 1, except for using 5 bundles of wholly aromatic polyester fibers ("Vectran NT" manufactured by Kuraray Co., Ltd.) each having a fineness of 6680 dtex and the number of filaments of 1200, which were aligned as a tow having a tow thickness of 0.13 mm, and using the spreading machine by adjusting a width of spread multifilaments into 20 mm determined by visual inspection. The tape had a width of 22.0 mm (coefficient of variation of 16.2 CV%) and a thickness of 0.19 mm (coefficient of variation of 13 CV%). The tape had a width/thickness ratio of 114, and a ratio ($a_t$/L) of the thickness at of the filamentary tape to the theoretical single fiber diameter L was 8.6. The filamentary tape had a tensile strength of 2.87 GPa, a strength retention rate at 100°C of 94%, and a strength exhibiting rate at 150°C of 50%, indicating high heat resistance and high strength. The obtained tape had a fusion score of 12.

Example 6

A filamentary tape made of wholly aromatic polyester fibers was obtained in the same manner as that of Example 1, except for directly subjecting as-spun yarns to heat treatment without involving a spreading step, in which each yarn had a width that allowed the fibers in the yarn to be mutually bonded. The tape had a width of 1.56 mm (coefficient of variation of 22.1 CV%) and a thickness of 0.090 mm (coefficient of variation of 16 CV%).

The tape had a width/thickness ratio of 17, and a ratio ($a_t$/L) of the thickness at of the filamentary tape to the theoretical single fiber diameter L was 4.0. The filamentary tape had a tensile strength of 3.41 GPa, a strength retention rate at 100°C of 99%, and a strength exhibiting rate at 150°C of 54%. The tape had a fusion score of 25.

Table 5

| | Total fineness (dtex) | Tape width (mm) | CV (%) | Thickness (mm) | CV (%) | Width/ Thickness | $a_t/L$ | Tensile strength (GPa) | Strength retention rate at 100°C (%) | Strength exhibiting rate at 150°C (%) | Fusion score |
|---|---|---|---|---|---|---|---|---|---|---|---|
| Example 1 | 1670 | 1.95 | 4.36 | 0.081 | 3.8 | 24 | 3.6 | 3.43 | 99 | 57 | 25 |
| Example 2 | 1670 | 3.50 | 7.43 | 0.049 | 3.6 | 72 | 2.2 | 3.33 | 98 | 58 | 17 |
| Example 3 | 1670 | 5.07 | 8.23 | 0.030 | 4.1 | 169 | 1.3 | 2.92 | 99 | 55 | 8 |
| Example 4 | 6680 | 10.80 | 12.4 | 0.062 | 8.9 | 174 | 2.8 | 3.36 | 95 | 52 | 20 |
| Example 5 | 6680 | 22.00 | 16.2 | 0.190 | 13 | 114 | 8.6 | 2.87 | 94 | 50 | 12 |
| Example 6 | 1670 | 1.56 | 22.1 | 0.090 | 16 | 17 | 4.0 | 3.41 | 99 | 54 | 25 |

As shown in Table 5, Examples I to 6 can provide filamentary tapes each having a desired width and a desired thickness. In all of Examples 1 to 6, there clearly exist the strip-like materials each of which is unified by partial fusion. A filamentary tape having a higher fusion score tends to have a higher tensile strength.

Comparative Example 1

Ultrahigh-molecular-weight polyethylene fiber multifilaments having an intrinsic viscosity of 12 dl/g when measured in decalin at 135°C in accordance with ASTM D1601-99 and a fineness of 1333 dtex were prepared and spread to have a width of 2 mm. A filamentary tape made of the ultrahigh-molecular-weight polyethylene fibers was obtained by subjecting the spread fibers to gradual temperature increase from room temperature to 150°C under a nitrogen atmosphere. The tape had a strength retention rate at 100°C of 34%. Although it was attempted to evaluate a strength exhibiting rate at 150°C, since the tape was immediately broken under an initial load of the measurement device, the tensile strength of the tape was unable to be measured at 150°C. Thus, the tape had a considerably poor result to that of the present invention in terms of heat resistance.

Comparative Example 2

Copolyparaphenylene-3,4’-oxydiphenylene-terephthalamide fibers ("Technora" manufactured by Teijin Limited) having a fineness of 1670 dtex and the number of filaments of 1000 were prepared and spread in a width direction in accordance with the spreading method described in JP 63-69626 A, i.e., the multifilaments were spread by passing the fibers over gears that were provided at two locations and had different curvatures from each other, and then drawing the fibers under a tensile force of 600 g (1/65 of strength at break) to stretch curls. Then, on upper and lower surfaces of the spread fibers, were overlaid undrawn polypropylene films ("PYLEN-Film CT" manufactured by TOYOBO CO., LTD.) each having a thickness of 20 μm and being cut to have a width of 7 mm with drawing the film under a tensile force of 600 g. To the overlaid material, release papers were immediately attached from the upper and lower sides and then the overlaid material were subjected to a thermo-compression at a linear load of 50 kg/cm between metal rolls provided at two locations and heated to 150°C, and further subjected to compression between metal rolls provided at two locations and retained at room temperature under a linear load of 50 kg/cm. Then, the release papers were removed to obtain a fiber-reinforced resin tape. The fiber-reinforced resin tape had a tensile strength of 0.72 GPa, showing a considerably poor result to that of the present invention in terms of tensile strength.

Comparative Example 3

Wholly aromatic polyester fibers ("Vectran NT" manufactured by Kuraray Co., Ltd.) having a fineness of 1670 dtex and the number of filaments of 300, which were used in Example 1, were prepared and used as a sample in a state where the multifilaments were spread to have a width of 2 mm determined by visual inspection.

The sample had a fusion score of 0 which was measured in the same manner as that of Example 1. That is, as shown in Fig. 2, single fibers of the multifilaments were dispersed, and there were no strip-like materials on a round filter paper. Thus, the sample had a considerably poor result to that of the present invention in terms of retention of the tape shape.

INDUSTRIAL APPLICABILITY

The filamentary tape of the present invention may be suitably used as a material such as a flexible container bag, a tie band and a repair tape and a composite material such as a multilayer plate.

Although the preferred embodiments of the present invention have been described with reference to the drawings, various additions, modifications, or deletions may be made without departing from the scope of the invention. Accordingly, such variants are included within the scope of the present invention.

[Reference Numerals]

| | |
|---|---|
| 1 | Single fiber |
| 2 | Bottom pseudo-layer |
| 3 | Intermediate pseudo-layer |
| 3 | Top pseudo-layer |
| 5, 6 | bonded part (fused part) |

10 Filamentary tape

## Claims

1. A filamentary tape comprising multifilaments including a plurality of liquid crystal polyester fibers, wherein the multifilaments aligned in one direction are unified by partial fusion between the liquid crystal polyester fibers.

2. The filamentary tape according to claim 1, wherein the filamentary tape has a fusion score of 10 or higher.

3. The filamentary tape according to claim 1 or 2, wherein the filamentary tape has a tensile strength of 2.5 GPa or higher, a strength retention rate at 100°C of 40% or higher and a strength exhibiting rate at 150°C of 30% or higher.

4. The filamentary tape according to any one of claims 1 to 3, wherein in the filamentary tape, a ratio ($a_t$/L) of a thickness at to a theoretical single fiber diameter L is 1.5 or higher.

5. The filamentary tape according to any one of claims 1 to 4, wherein the filamentary tape has a width/thickness ratio of 5 or higher and 10000 or lower.

6. The filamentary tape according to any one of claims 1 to 5, wherein in the filamentary tape, a coefficient of variation in width is 20 CV% or lower.

7. The filamentary tape according to any one of claims 1 to 6, wherein in the filamentary tape, a coefficient of variation in thickness is 15 CV% or lower.

8. A weaving material comprising a filamentary tape according to any one of claims 1 to 7.

9. A woven fabric comprising a filamentary tape according to any one of claims 1 to 7.

10. A composite material comprising a filamentary tape according to any one of claims 1 to 7.

Fig. 1

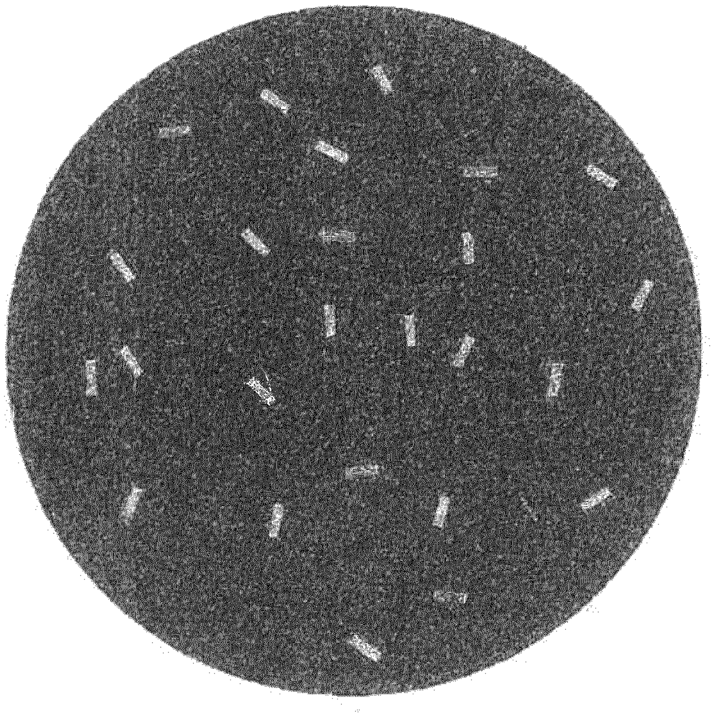

Fig. 2

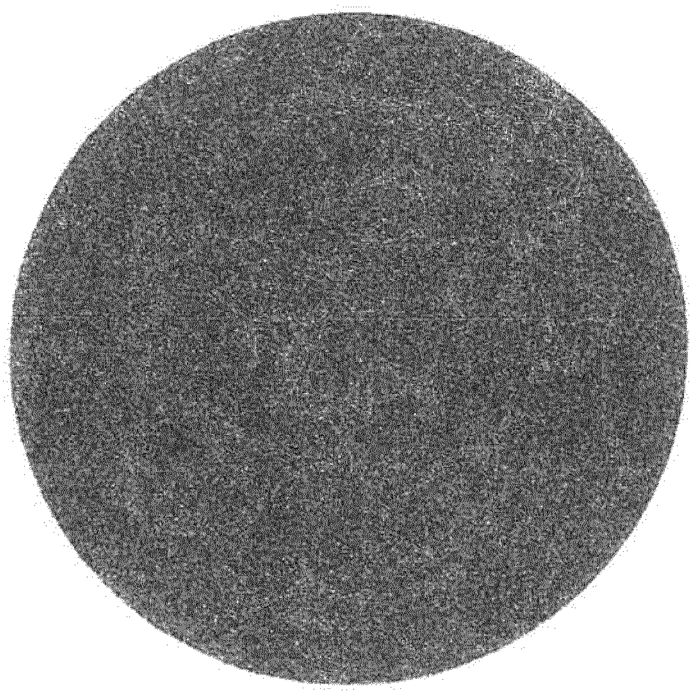

Fig. 3

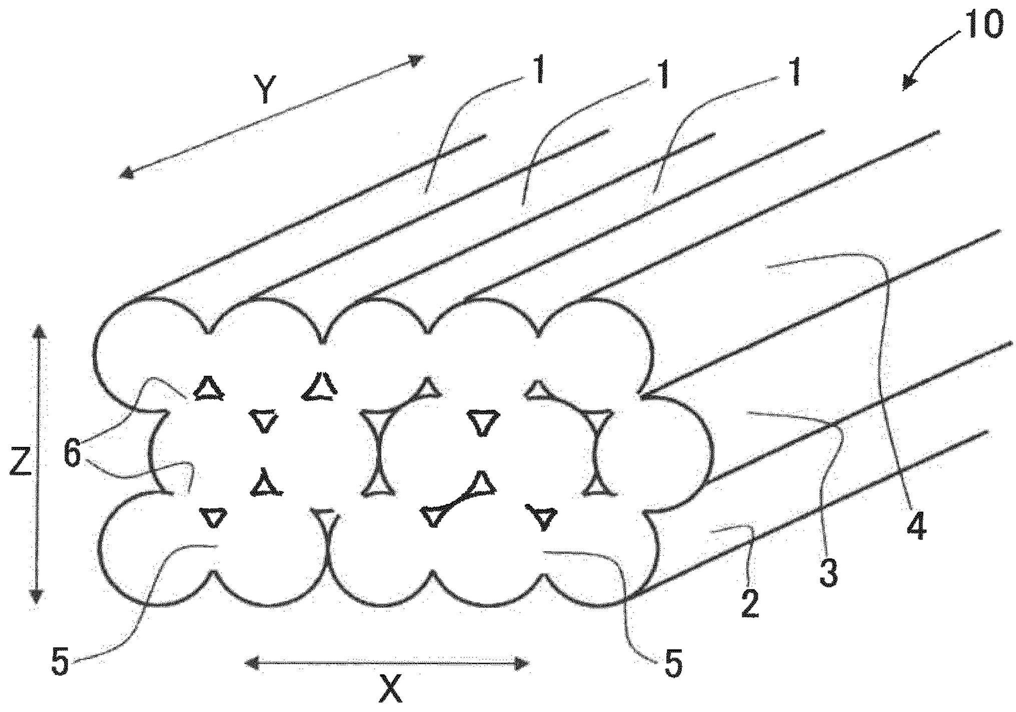


Fig. 4

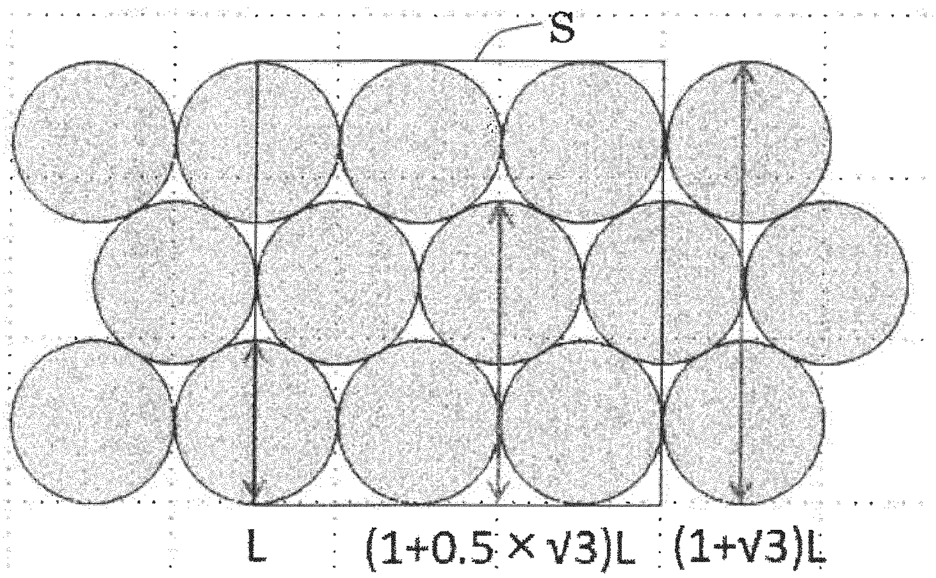

## INTERNATIONAL SEARCH REPORT

International application No. PCT/JP2019/003916

A. CLASSIFICATION OF SUBJECT MATTER
Int.Cl. D04H3/04(2012.01)i, D04H3/14(2012.01)i, C08J5/18(2006.01)n, D01F6/62(2006.01)n, D01F6/84(2006.01)n, D04H3/011(2012.01)n

According to International Patent Classification (IPC) or to both national classification and IPC

B. FIELDS SEARCHED

Minimum documentation searched (classification system followed by classification symbols)
Int.Cl. D04H3/04, D04H3/14, C08J5/18, D01F6/62, D01F6/84, D04H3/011

Documentation searched other than minimum documentation to the extent that such documents are included in the fields searched

| | |
|---|---|
| Published examined utility model applications of Japan | 1922-1996 |
| Published unexamined utility model applications of Japan | 1971-2019 |
| Registered utility model specifications of Japan | 1996-2019 |
| Published registered utility model applications of Japan | 1994-2019 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 1-266147 A (TOYOBO BOSEKI KABUSHIKI KAISHA) 24 October 1989, claims, page 1, lower left column, page 2, upper right column to lower left column, page 3, upper left column to lower left column (Family: none) | 1-3, 5-7<br>4, 8-10 |
| Y<br>A | JP 2017-527703 A (DSM IP ASSETS B.V.) 21 September 2017, claims, paragraphs [0008], [0012], [0030] & US 2017/0153090 A1, claims, paragraphs [0008], [0012], [0038] & WO 2015/193215 A1 & EP 3155359 A1 & AU 2015276312 A & CA 2953228 A1 & CN 106461362 A & KR 10-2017-0023819 A | 4<br>1-3, 5-10 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>17 April 2019 (17.04.2019) | Date of mailing of the international search report<br>07 May 2019 (07.05.2019) |
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

**INTERNATIONAL SEARCH REPORT**

International application No.
PCT/JP2019/003916

C (Continuation). DOCUMENTS CONSIDERED TO BE RELEVANT

| Category* | Citation of document, with indication, where appropriate, of the relevant passages | Relevant to claim No. |
|---|---|---|
| Y<br>A | JP 2015-017343 A (KURARAY CO., LTD., SUNCORONA ODA CO., LTD.) 29 January 2015, claims, paragraph [0051] (Family: none) | 8-10<br>1-7 |
| Y<br>A | JP 2008-291170 A (IJIN TECHNO PRODUCTS LTD.) 04 December 2008, paragraphs [0011], [0022], [0042] (Family: none) | 8-10<br>1-7 |
| A | JP 2008-75239 A (YOZ-AMI CO., LTD.) 03 April 2008, whole document (Family: none) | 1-10 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2018019322 A
- JP 2008291170 A
- WO 2011019512 A
- JP 2017179647 A
- JP 3064019 B
- JP 63069626 A